# NEUE EUROPÄISCHE PATENTSCHRIFT

(11) **EP 1 897 438 B2**
(45) Veröffentlichungstag und Bekanntmachung des Hinweises auf die Entscheidung über den Einspruch: **25.12.2019**
(45) Hinweis auf die Patenterteilung: 10.05.2017
(21) Anmeldenummer: 07014865.5
(22) Anmeldetag: 28.07.2007
(51) Int. Cl.: A01K 9/00, A01K 5/02

(54) **Fahrbarer Milchbehälter für die Nutztieraufzucht, insbesondere von Kälbern**
Transportable milk container for livestock breeding, in particular for calves
Récipient à lait roulant pour l'élevage d'animaux de la ferme, en particulier de bovins

(30) Priorität: 07.09.2006 DE 202006013899 U
(43) Veröffentlichungstag der Anmeldung: 12.03.2008
(60) Teilanmeldung: 14200524.8
(73) Patentinhaber: Laue, Hans-Joachim, 24783 Osterrönfeld (DE); Holm, Hans Joachim, 24784 Westerrönfeld (DE)
(72) Erfinder: Laue, Hans-Joachim, 24783 Osterrönfeld (DE); Holm, Hans Joachim, 24784 Westerrönfeld (DE)
(74) Vertreter: Hauck Patentanwaltspartnerschaft mbB

(56) Entgegenhaltungen:
- EP-A- 1 522 217
- EP-A1- 0 903 078
- WO-A1-2004/106219
- DE-A1- 3 709 387
- DE-A1- 19 901 587
- DE-U1- 20 305 754
- DE-U1-202005 012 843
- DE-U1-202005 012 843
- US-A- 3 037 481
- US-A- 4 181 097
- US-A- 4 502 416
- US-A1- 2004 163 577
- US-B1- 6 360 691
- Dirk Wietzke: "Euro Tier- Kälber mobil Tränken", Landpost, 2 December 2006 (2006-12-02), pages 32-33, XP055433896,

## Beschreibung

Die Erfindung bezieht sich auf einen fahrbaren Milchbehälter für die Nutztieraufzucht, insbesondere von Kälbern, nach den Ansprüchen 1 und 4.

Ein Milchwagen der eingangs genannten Art ist aus DE 20 2005 012 843 U bekannt geworden. Ein Behälter auf einem fahrbaren Untersatz ist mit einer Pumpe versehen, die mit ihrer Saugseite mit dem Boden des Behälters in Verbindung ist und mit ihrer Abgabeseite mit einer Leitung. Am Ende der Leitung befindet sich eine Füllpistole oder dergleichen, mit der Milch in einen Futterbehälter abgegeben werden kann. Eine Steuervorrichtung ist vorgesehen, mit der die abzugebende Menge bemessen werden kann. Schließlich weist der Behälter auch einen Einlaß auf, der mit dem Abgabeende der Leitung verbindbar ist. Dadurch ist es möglich, die Milch innerhalb des Behälters umzuwälzen. Außerdem läßt sich auf diese Weise Reinigungsflüssigkeit umspülen, um den Behälter nach der Benutzung zu reinigen.

Aus der Druckschrift DE 20 2005 012 843 U1 ist ein Milchwagen mit den Merkmalen des Oberbegriffs der Ansprüche 1 und 4 bekannt geworden. Aus der Druckschrift US 3,037,481 A ist eine Vorrichtung zum automatischen Anmischen von Milch bekannt geworden.

Der Erfindung liegt die Aufgabe zugrunde, den eingangs genannten bekannten fahrbaren Milchbehälter dahingehend zu verbessern, daß er noch besser an die Fütterungsbedingungen angepasst ist.

Diese Aufgabe wird durch die Merkmale der Ansprüche 1 und 4 gelöst.

Der erfindungsgemäße Milchwagen auf Rädern für die Nutztieraufzucht hat einen Behälter zur Aufnahme der Milch, ein unterhalb des Behälterbodens angeordnetes, elektrisch betriebenes Pumpenaggregat, dessen Saugseite mit einem Ablauf im Behälterboden verbunden ist, und eine an die Druckseite des Pumpenaggregats angeschlossene Abgabevorrichtung, wobei die Abgabevorrichtung entweder ein galgenartiges, verschwenkbares Rohr aufweist, dessen schwenkbar gelagertes Ende mit der Druckseite des Pumpenaggregats verbunden ist und dessen freies Ende in einer ersten Stellung frei nach außen ragt und in einer zweiten, gegenüber der ersten Stellung verschwenkten Stellung oberhalb des Behälters liegt, oder einen Schlauch, an dessen Ende eine Abfüllpistole angeordnet ist, und eine Steuervorrichtung für das Pumpenaggregat zur dosierten Abgabe der Milch über die Abgabevorrichtung, wobei in der Abfüllpistole oder im Endbereich des galgenartigen Rohrs ein Ventil mit einem federvorgespannten Ventilglied angeordnet ist, das ab einem vorgegebenen Pumpendruck öffnet.

Zur Dosierung der Menge abzugebender Milch kann eine Volumen- oder Gewichtssteuerung vorgesehen werden. Nach einer Ausgestaltung der Erfindung ist vorgesehen, daß die Steuervorrichtung eine manuell einstellbare Zeitsteuerung aufweist, insbesondere ein Potentiometer enthält. Mit dem Potentiometer kann die Laufzeit des Motors für die Pumpe vorgewählt werden. Somit kann der Landwirt die Milchmenge pro Kalb und Mahlzeit festlegen, die in der Regel für mehrere Kälber gleich ist.

Die individuelle Milchabgabe bei dem erfindungsgemäßen Behälter soll möglichst einfach und schnell von statten gehen. Bei der Abgabe in einzelne Gefäße für Kälber z. B. werden nur kleine Mengen von etwa 2 bis 3 Litern abgegeben. Eine Ausgestaltung der Erfindung sieht vor, daß ein Bedienelement für einen entsprechenden Schalter, der den Pumpenmotor in Betrieb setzt, an einer Handhabe angebracht ist, mit welcher der Behälter geschoben oder gezogen werden kann. Zu diesem Zweck kann eine deichselartige Handhabe, die jedoch unverschwenkbar am Behälter bzw.. dem Fahraufsatz angebracht ist, verwendet werden, wobei ein Bedienelement zweckmäßigerweise Heizvorrichtung verbunden sind. Die Verwendung eines Temperatursensors ist auch bei dem bekannten fahrbaren Milchbehälter vorgesehen. Er dient dazu, dem Benutzer die Temperatur im Milchbehälter anzuzeigen. Bei der Erfindung ist der Temperatursensor alternativ oder zusätzlich mit dem Mikroprozessor verbunden, damit er über die Heizvorrichtung in Abhängigkeit von der gemessenen Temperatur die Temperatur der Milch im Tank steuern kann. Bei der Erfindung sind ferner ein Zeitgeber und ein Mengengeber vorgesehen. Mit dem Zeitgeber kann der Benutzer die Zeit einstellen, zu welcher eine Aufheizung der Milch zu Pasteurisierungszwecken einsetzen kann. Diese Zeit ist so eingestellt, daß der Benutzer zur Fütterungszeit eine Temperatur der Milch vorfindet, die der Fütterungstemperatur entspricht. Um dies zu erreichen, kann der Mikroprozessor auch "wissen", welche Menge im Tank ist, damit ausgerechnet werden kann, wieviel Zeit vergeht, um z. B. eine bestimmte Menge von Raumtemperatur z. B. auf 70°C zu erwärmen und anschließend z. B. auf 40°C abkühlen zu lassen. Falls die Menge nicht bekannt ist, wird der Heizvorgang rechtzeitig gestartet. Wird die Tränketemperatur erreicht, wird sie durch Nachheizen auf dieser gehalten.

Mit anderen Worten, der Benutzer braucht lediglich maximal zwei Eingaben, z.B. am Vorabend zu machen, damit am nächsten Morgen zur Fütterungszeit die Milch erstens pasteurisiert ist und zweitens die vorgegebene Fütterungstemperatur aufweist. Aus Hygienegründen sollte die Pasteurisierung möglichst nahe an der Fütterungszeit liegen, da insbesondere bei der Erwärmung und dem anschließenden Abkühlen die Entwicklung von Keimen in der Milch beschleunigt abläuft.

Bei dem erfindungsgemäßen Behälter kann auch ein Füllstandsmesser vorgesehen werden. Der Füllstandsmesser mißt die jeweilige Menge im Tank und gibt ein Signal an den Mikroprozessor. In diesem Fall ist für den Benutzer lediglich erforderlich, am Vorabend bzw. vor der Fütterungszeit diese entsprechend einzugeben. Es versteht sich, daß es auch möglich ist, die einmal gespeicherte Zeit für mehrere Tage aufrecht zu erhalten, wenn die Fütterungszeit sowie auch die Fütterungsmenge stets gleich sind. Ist das Volumen im Tank unterschiedlich, kann mit Hilfe des Füllstandsmessers eine entsprechende Anpassung vorgenommen werden. Daher ist die Bedienbarkeit für den fahrbaren Milchbehälter extrem vereinfacht. Gleichwohl werden optimale Fütterungsbedingungen für die Tiere bereit gestellt.

Wegen der beschriebenen vermehrten Keimbildung nach dem Verlassen der Pasteurisierungstemperatur ist es vorteilhaft, die Milch rasch abzukühlen. Daher sieht eine weitere Ausgestaltung der Erfindung vor, daß im Tank eine Kühlschlange angeordnet ist und der Tank zwei Anschlüsse aufweist, von denen einer ein steuerbares Ventil aufweist und mit einem Wasseranschluß und der andere mit einem Wasserablauf verbindbar ist. Das steuerbare Ventil wird vom Mikroprozessor geöffnet, wenn die Heizvorrichtung die erste Temperatur eine vorgegebene Zeit gehalten hat. Das Ventil wird geschlossen, wenn die zweite Temperatur erreicht ist.

Es versteht sich, daß auch ein separates Kühlaggregat vorgesehen werden kann, das z. B. mit elektrischer Energie betrieben wird. Der Aufwand hierfür ist jedoch deutlich höher als für eine mit der üblichen Wasserversorgung beschickten Kühlschlange.

Nach einer weiteren Ausgestaltung der Erfindung wird von der Heizvorrichtung die im Tank vorhandene Milch nach dem Abkühlen von der erhöhten ersten Temperatur auf einer vorgegebenen zweiten Temperatur gehalten. Dies geschieht mit Hilfe des Temperatursensors, so daß z. B. die Milch auf 40°C gehalten werden kann, der normalen Fütterungstemperatur. Dies ist für den Fall notwendig, daß z. B. die Fütterungszeit nicht exakt eingehalten und die Fütterung z. B. um ½ Stunde verzögert wird.

Zur Dosierung der Menge abzugebender Milch kann eine Volumen-, Zeit-oder Gewichtssteuerung vorgesehen werden. Nach einer Ausgestaltung der Erfindung ist vorgesehen, daß die Steuervorrichtung eine manuell einstellbare Zeitsteuerung aufweist, insbesondere ein Potentiometer enthält. Mit dem Potentiometer kann die Laufzeit des Motors für die Pumpe vorgewählt werden. Somit kann der Landwirt die Milchmenge pro Kalb und Mahlzeit festlegen, die in der Regel für mehrere Kälber gleich ist.

Die individuelle Milchabgabe bei dem erfindungsgemäßen Behälter soll möglichst einfach und schnell von statten gehen. Bei der Abgabe in einzelne Gefäße für Kälber z. B. werden nur kleine Mengen von etwa 2 bis 3 Litern abgegeben. Eine Ausgestaltung der Erfindung sieht vor, daß ein Bedienelement für einen entsprechenden Schalter, der den Pumpenmotor in Betrieb setzt, an einer Handhabe angebracht ist, mit welcher der Behälter geschoben oder gezogen werden kann. Zu diesem Zweck kann eine deichselartige Handhabe, die jedoch unverschwenkbar am Behälter bzw. dem Fahraufsatz angebracht ist, verwendet werden, wobei ein Bedienelement zweckmäßigerweise in der Nähe eines Giffabschnitts angebracht werden kann. Dadurch kann er betätigt werden, während die das Bedienelement betätigende Hand den Griffabschnitt gleichwohl umfaßt. Es können zwei parallel beabstandete Stangen schräg nach oben geführt sein, die an den oberen Enden zu Hornabschnitten umgelenkt sind, wobei die freien Enden der Hornabschnitte einen Abstand voneinander haben. Am einen Ende des Homabschnitts kann ein Bedienelement in Form eines Tasters oder dergleichen angebracht sein. Eine Signalleitung führt dann vom Taster zu der Steueranordnung im Behälter. So kann z. B. lediglich ein einfacher Tastendruck erforderlich sein, um eine Abgabe in Gang zu setzen Die abzugebende Menge wird dann vorher in geeigneter Weise eingestellt.

Es ist auch denkbar, statt eines relativ kürzeren Schlauches oder eines Galgens zur Abgabe der Milchmengen mit dem Behälter einen längeren Schlauch zu verbinden. Dies ist vor allen Dingen dann zweckmäßig, wenn der fahrbare Behälter nicht bis nahe an die jeweiligen Tränkgefäße herangefahren werden kann. Der Bediener läßt den fahrbaren Behälter an einem geeigneten Ort stehen und ergreift das Abfüllende eines längeren Schlauchs, um nacheinander die Tränkgefäße zu befüllen. Dies kann z. B. mit Hilfe einer geeigneten Abgabepistole erfolgen. Da die Abgabe über die Pumpe am Behälter erfolgt, ist ein entsprechendes Signal an die Pumpensteuerung abzugeben. Daher kann an dem Abgabeende des Schlauchs auch ein Bedienelement angeordnet sein, dessen Betätigung zu einem Signal führt, da es auf geeignete Weise zum Behälter übertragen wird. Dies kann beispielsweise durch eine am Schlauch angebrachte Signalleitung der Fall sein oder über eine in den Schlauch eingearbeitete Signalleitung. Alternativ kann auch eine Funkübertragung zwischen dem Abgabeende und dem Behälter stattfinden, um ein entsprechendes Startsignal für das Pumpenaggregat zu erzeugen.

Die Abgabevorrichtung enthält entweder einen Schlauch mit Abfüllpistole oder ein galgenartiges Rohr, das wahlweise nach außen geschwenkt werden kann zur Abgabe der Milch in bereitstehende Behälter. In diesem Zusammenhang sieht die Erfindung vor, daß am Auslauf der Pistole oder des Schwenkrohrs ein federbelastetes Ventil vorgesehen ist, das erst öffnet, wenn die Pumpe einen gewissen Druck aufgebaut hat. Wird die Pumpe abgeschaltet, schließt das Ventil. Dadurch wird wirkungsvoll das Nachtropfen verhindert, wenn der Landwirt nach dem Befüllen eines Gefäßes zum nächsten weiterfährt. Während der Reinigung ist zweckmäßigerweise das Ventil auf freien Durchgang zu stellen, wodurch es zu diesem Zweck eine manuelle Handhabe aufweist, um das Ventilglied in Offenstellung zu bringen.

Bei größeren Milchmenge kann es zweckmäßig sein, den Milchwagen durch ein kleines Zugfahrzeug zu bewegen. In diesem Zusammenhang sieht die Erfindung vor, daß im Zugfahrzeug eine Bedieneinrichtung vorgesehen ist, die über ein Kabel oder dergleichen mit der Steuervorrichtung am Milchwagen koppelbar ist. Somit kann vom Zugfahrzeug aus die Abgabe der Milch gesteuert werden. Der Landwirt kann auf dem Zugfahrzeug sitzend entlang einer Reihe von Gefäßen fahren und diese dann in geeigneter Weise dosiert befüllen. Am Ende wird dann das Schwenkrohr, mit dem in diesem Falle bevorzugt gearbeitet wird, in eine Stellung zurückgeschwenkt, die ein weiteres Fahren nicht behindert. Dieses Verschwenken kann durch einen Schwenkantrieb erfolgen, der am Milchwagen bzw. am Behälter angebracht ist und der ebenfalls über die Bedieneinrichtung vom Zugfahrzeug aus betätigt werden kann.

Alternativ kann der fahrbare Milchbehälter auch direkt mit einem Antrieb ausgestattet werden, z.B. einem Elektroantrieb, der aus einer Batterie versorgt wird.

Die Erfindung soll nachfolgend anhand von eines in Zeichnungen dargestellten Ausführungsbeispiels näher erläutert werden.
- Fig. 1: zeigt die Seitenansicht eines fahrbaren Milchbehälters nach der Erfindung.
- Fig. 2: zeigt ein Blockschaltbild für die Steuerung des Milchbehälters.
- Fig. 3: zeigt perspektivisch die Handhabe nach Fig. 1 mit einem Bedienelement.
- Fig.4: zeigt schematisch einen längeren Abfüllschlauch für den Behälter nach Fig. 1.
- Fig. 5: zeigt eine alternative Abgabemöglichkeit aus einem Behälter nach Fig. 1.

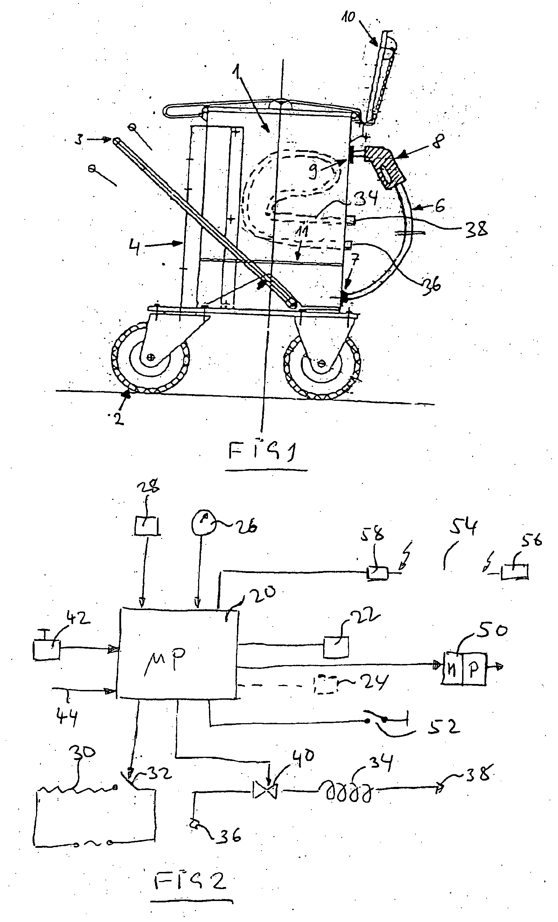

In Fig. 1 ist ein Milchwagen dargestellt mit einem Behälter 1, der über ein Fahrgestell auf Rädern 2 steht, so daß sich ein fahrbarer Wagen ergibt. Zum Handhaben des Wagens sind höhenverstellbare Handgriffe 3 vorgesehen. An der den Handgriffen zugewandten Seite des Behälters 1 befindet sich ein Kasten 4 für die Steuerung von Aggregaten des Behälters, worauf weiter unten noch eingegangen wird. Am Kasten können Bedienelemente für eine nicht gezeigte Dosiersteuerung in griffgünstiger Höhe angeordnet werden.

Ein Schlauch 6 verbindet einen Anschlußstutzen 7 mit einer Zapfpistole 8. Der Anschluß ist seinerseits mit einem nicht gezeigten Pumpenaggregat unterhalb des Bodens des Behälters 1 verbunden. Die Zapfpistole 8 hat einen Handgriff und am vorderen Bereich ein konisch auslaufendes Rohr, mit dem Milch abgegeben werden kann. Die Zapfpistole 8 ist in einer Position dargestellt, in der das konische Rohr in einen Anschluß 9 eingesteckt ist, der einen Durchgang zum Innenraum des Behälters 1 aufweist. Ferner verfügt der Milchwagen über einen Deckel 10 mit Dichtring und einen vom unteren Ende des Behälters 1 beabstandeten Boden 11. In Höhe des Bodens befindet sich ein Anschluß für ein Ladekabel (nicht dargestellt). Im gezeigten Fall ist das Pumpen-aggregat batteriebetrieben. Natürlich kann auch ein Netzanschluß vorgesehen sein.

Die Zapfpistole enthält ein Ventil mit federvorgespanntem Ventilglied, das ab einem vorgegebenen Pumpendruck öffnet (nicht gezeigt). Es kann von einem ebenfalls nicht gezeigten Bedienelement in eine permanente Offenstellung gebracht werden.

In der in Fig. 1 gezeigten Position des Schlauches 1 bzw. der Zapfpistole 8 kann ein Umlauf von Milch bzw. von Flüssigkeit aus dem Tank und in den Tank zurück bewerkstelligt werden. Zu diesem Zweck treibt ein Elektromotor eine Pumpe an, welche in Bodenhöhe die Flüssigkeit absaugt und über den Schlauch 6 nach oben in den Tank zurück transportiert. Es versteht sich, daß dies auch dadurch geschehen kann, daß die Zapfpistole oben über dem Behälter z. B. von Hand gehalten wird. Der Deckel 10 ist dabei geöffnet.

Die Dosierung wird, wie erwähnt, an den Bedienelementen, z.B. über ein Potentiometer eingestellt, und die Steuerung des elektrischen Motors zwecks Dosierzwecken erfolgt über einen nicht gezeigten Mikroprozessor in der Steuerung.

In Fig. 2 ist ein Schaltbild dargestellt für einen Teil der Steuerschaltung im Kasten 4. Ein Mikroprozessor 20 ist mit einem Temperatursensor 22 verbunden sowie mit einem gestrichelt gezeigten Füllstandssensor 24. Außerdem ist ein Zeitgeber 26 vorgesehen sowie ein Mengengeber 28. Der Mengengeber 28 und der Füllstandssensor 24 sind alternativ. Damit kann dem Mikroprozessor 20 die im Behälter 1 befindliche Flüssigkeitsmenge eingegeben werden.

Der Mikroprozessor 20 steuert eine Heizvorrichtung 30, die an eine Energiequelle angeschlossen ist. Dies kann eine Batterie oder auch ein Netzanschluß sein. Ein Schalter 32 wird betätigt, wenn die Heizvorrichtung 30 betrieben werden soll.

Eine Wärmetauscherschlange 34 befindet sich im Behälter 1. Sie weist einen Anschluß 36 für z. B. das Wasser einer Wasserversorgung auf. Sie weist einen weiteren Anschluß 38 auf, der zu einem Ablauf (nicht gezeigt) geführt werden kann. Dem Anschluß 36 ist ein Ventil 40 zugeordnet. Es können auch drei Anschlüsse vorgesehen werden, einer für heißes Wasser, einer für kaltes Wasser und der dritte für den Ablauf. Den ersten beiden ist ein Ventil zugeordnet, um wahlweise den Behälterinhalt zu erwärmen oder zu kühlen.

In Fig. 2 ist ein Motorpumpenaggregat 50 dargestellt, das mit dem Mikroprozessor 20 verbunden ist. Ferner ist ein Schalter 52 dargestellt, dessen Betätigung das Motorpumpenaggregat 50 in Gang setzt, um eine vorgegebene Milchmenge abzugeben. Schließlich ist eine Funkstrecke 54 dargestellt, die zwischen einem Sendeelement 56 und einem Empfangselement 58 liegt. Das Empfangselement 58 ist in geeigneter Weise am Behälter 1 angebracht. Das Sendeelement 56 ist am Ende eines Schlauchs angebracht, der über eine größere Länge verfügt und alternativ zum Schlauch 6 mit dem Behälter 1 verbunden ist.

Die gezeigte Steuerung arbeitet wie folgt: Es sei angenommen, daß die Fütterungszeit morgens 6.00 Uhr ist. Am Vorabend wird der Behälter 1 mit einer Milchmenge gefüllt. Die Milchmenge wird entweder manuell über 28 dem Mikroprozessor übermittelt oder durch den Füllstandsmesser 24 gemessen und ebenfalls dem Mikroprozessor gemeldet. Außerdem wird über den Zeitgeber 26 die Fütterungszeit eingestellt. Der Mikroprozessor 20 ist so ausgelegt, daß er ermittelt, wann mit Hilfe der Heizvorrichtung 30 die Milch auf z. B. 70°C erwärmt werden muß, so daß anschließend während der Fütterungszeit durch abschließende Abkühlung die Milch z. B. die Fütterungstemperatur von 40°C aufweist. Der Temperatursensor 22 mißt die Temperatur der Milch ständig, und der Mikroprozessor sorgt dafür, daß z. B. die Pasteurisierungstemperatur über einen vorgegebenen Zeitraum von z. B. 35 Minuten aufrecht erhalten wird. Anschließend wird die Heizvorrichtung 30 abgeschaltet. Zum Aufheizen kann zeitgesteuert auch die Wärmetauscherschlange 34 verwendet werden, indem das zugeordnete Ventil den Heißwasseranschluß mit der Schlange 34 verbindet.

Um die Milch rasch von 70°C auf einen niedrigeren Wert abzukühlen, ist die Kühlschlange 34 mit dem Kaltwasseranschluß 36 verbunden. Nach Ablauf der erwähnten 35 Minuten wird das Ventil 40 geöffnet, und durch die Kühlschlange 34 strömt kühles Wasser und kühlt die Milch rasch auf z. B. 40°C herunter. Sind die 40°C erreicht, wird das Ventil 40 wieder geschlossen, und die Milch befindet sich auf Fütterungstemperatur, und der fahrbare Behälter kann zur Fütterungszeit zu dem gewünschten Fütterungsort transportiert werden. Es versteht sich, daß hierzu die Verbindung der Wärmetauscherschlange 34 von dem einen bzw. beiden Wasseranschlüssen (heiß und kalt) getrennt wird. Ist eine Kabelverbindung zwischen dem Fütterungswagen und dem Netz hergestellt, muß auch diese naturgemäß getrennt werden.

Der Betrieb ist auch ohne Kühlschlange möglich. Dann wird die Milch länger durch die kalte Umgebungsluft abgekühlt. Alternativ kann die Kühlschlange auch zum Aufheizen der Milch verwendet werden, wenn eine ausreichende Warmwassermenge zur Verfügung steht.

Das Pumpenaggregat 50 wird über den Mikroprozessor 20 gesteuert. Zur Abgabe einer vorgegebenen Menge wird ein Bedienelement (Schalter 52) am Behälter 1 bzw. der Steuervorrichtung 4 betätigt. Dies ist durch Pfeil 44 in Fig. 2 angedeutet. Die vorgesehene Menge kann z.B. über ein Potentiometer 42 eingestellt werden. Der Potentiometer 42, das manuell betätigbar ist, gibt die Zeit vor, in der der Motor des Pumpenaggregats eingeschaltet ist. Die Einschaltdauer bestimmt somit die abgegebene Milchmenge.

Schließlich sei erwähnt, daß das in Fig. 1 dargestellte Fahrzeug mit Mitteln versehen werden kann, um von einem hier nicht gezeigten kleinen Zugfahrzeug gezogen zu werden. Das Zugfahrzeug kann mit einer Bedieneinrichtung versehen werden, die über ein koppelbares Kabel mit der Steuervorrichtung 4 verbunden ist. Somit kann der Fahrer des Zugfahrzeugs vom Fahrzeug aus die Abgabe der Milch steuern. In diesem Falle ist jedoch ein schwenkbares Rohr 56 als eine Art Galgen einem Schlauch 6 mit Füllpistole 8 vorzuziehen. Ein derartiges schwenkbares Rohr kann von einem Schwenkantrieb 58 betätigt werden, der ebenfalls vom Fahrzeug aus bedienbar sein kann. Das Rohr ist über eine Drehverbindung 60 mit einem behälterfesten Anschluß verbunden und bei 62 um eine vertikale Achse drehbar gelagert. Am oberen Ende ist ein Ventil 64 vorgesehen, ähnlich dem oben erwähnten Ventil, das eine Lenksicherung bildet.

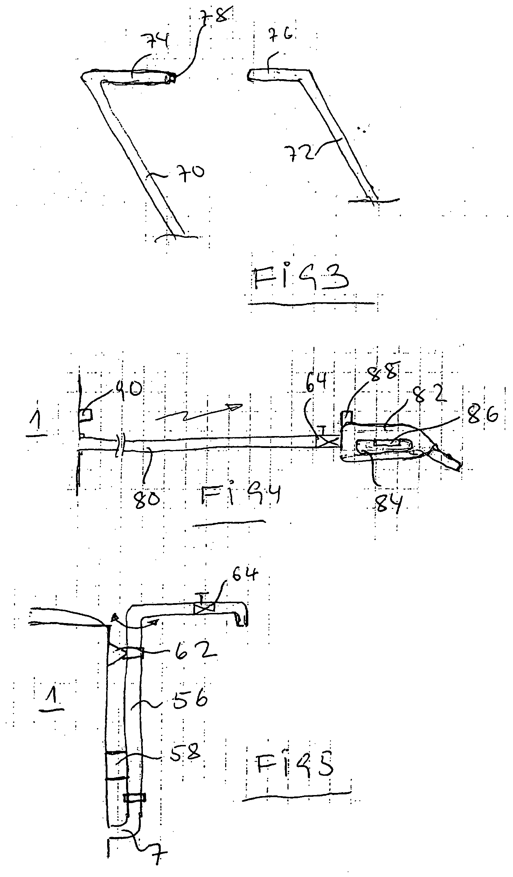

In Fig. 3 sind parallele, schräg nach oben verlaufende, Stangen 70, 72 dargestellt, die auf beiden Seiten des Behälters 1 mit dem fahrbaren Untersatz fest verbunden sind. Am oberen Ende weisen sie hornartige Abschnitte 74, 76 auf, die gleichgerichtet aufeinander zulaufen, jedoch einen Abstand zwischen sich lassen. Am linken Hornabschnitt 24 ist ein Tastelement 78 angebracht, das der Fahrer mit dem Daumen betätigen kann, um eine gewünschte Milchmenge abzugeben, indem er etwa die Pistole 8 nach Fig. 1 in der rechten Hand hält oder den Galgen nach Fig. 5 entweder per Hand oder per Antrieb oberhalb eines Trinkgefäßes schwingt.

In Fig. 4 ist ein längerer Abgabeschlauch 80 angedeutet, der als Beispiel eine Länge bis zu 10 Metern haben kann. Er ist in gleicher Weise wie der Schlauch 6 nach Fig. 1 mit dem Behälter 1 verbunden. Am Ende des Abgabeschlauchs 80 ist eine Abgabepistole 82 angebracht mit einem Griff 84, in dem sich ein Tastelement 86 befindet. An der Abgabepistole 82 ist ein Sendeelement 88 angebracht, das vom Tastelement 86 betätigt wird. Es sendet ein Funksignal entlang der Länge des Schlauchs 80 auf ein Empfangselement 90 am Behälter 1, das mit dem Mikroprozessor 20 in der Fig. 2 verbunden ist. Sende- und Empfangselement 88, 90 entsprechen Sende- und Empfangselement 56, 58 nach Fig. 2. Der Bediener kann sich daher relativ weit vom fahrbaren Behälter 1 entfernen und gleichwohl auf einfache Weise die vorgegebenen Mengen in Tränkgefäße abfüllen.

Das Ventil 64 ist in der Leitung 80 dargestellt. Es kann sich natürlich innerhalb der Abgabepistole 82 befinden, wobei jedoch eine Handhabe vorzusehen ist, um das Ventil außer Funktion zu setzen.

Bei der Erfindung kann zusätzlich eine Pumpe für Reinigungsmittel vorgesehen werden, so daß beim Spülen des Milchbehälters einfach Reinigungsmittel zugegeben werden kann. Denkbar ist auch eine automatische Reinigung.

## Patentansprüche

1. Milchwagen auf Rädern für die Nutztieraufzucht, mit einem Behälter (1) zur Aufnahme der Milch, einem unterhalb des Behälterbodens angeordneten, elektrisch betriebenen Pumpenaggregat, dessen Saugseite mit einem Ablauf im Behälterboden verbunden ist, und einer an die Druckseite des Pumpenaggregats angeschlossenen Abgabevorrichtung, wobei die Abgabevorrichtung ein galgenartiges verschwenkbares Rohr (56) aufweist, dessen schwenkbar gelagertes Ende mit der Druckseite des Pumpenaggregats verbunden ist und dessen freies Ende in einer ersten Stellung frei nach außen ragt und in einer zweiten, gegenüber der ersten Stellung verschwenkten Stellung oberhalb des Behälters (1) liegt, oder einen Schlauch (6, 80), an dessen Ende eine Abfüllpistole (8, 82) angeordnet ist, und einer Steuervorrichtung für das Pumpenaggregat zur dosierten Abgabe der Milch über die Abgabevorrichtung, **dadurch gekennzeichnet, daß** in der Abfüllpistole (8, 82) oder im Endbereich des galgenartigen Rohrs (56) ein Ventil (64) mit einem federvorgespannten Ventilglied angeordnet ist, das ab einem vorgegebenen Pumpendruck öffnet, wobei das Ventil (64) eine Handbetätigung aufweist zur Verstellung des Ventilglieds in eine permanente Offenstellung.

2. Milchwagen nach Anspruch 1, **dadurch gekennzeichnet, daß** der Milchwagen Anhängemittel aufweist für ein motorgetriebenes Zugfahrzeug, am Zugfahrzeug eine Bedieneinrichtung für die Steuervorrichtung vorgesehen ist, insbesondere zur Betätigung des Pumpenaggregats und der Dosierung der abzugebenden Milchmenge, und die Bedieneinrichtung über ein Kabel mit der Steuervorrichtung (4) am Behälter (1) koppelbar ist.

3. Milchwagen nach Anspruch 1 oder 2, **dadurch gekennzeichnet, daß** das schwenkbare Rohr (56) einen Schwenkantrieb aufweist.

4. Milchwagen auf Rädern für die Nutztieraufzucht, mit einem Behälter (1) zur Aufnahme der Milch, einem unterhalb des Behälterbodens angeordneten, elektrisch betriebenen Pumpenaggregat, dessen Saugseite mit einem Ablauf im Behälterboden verbunden ist, und einer an die Druckseite des Pumpenaggregats angeschlossenen Abgabevorrichtung, wobei die Abgabevorrichtung ein galgenartiges verschwenkbares Rohr (56) aufweist, dessen schwenkbar gelagertes Ende mit der Druckseite des Pumpenaggregats verbunden ist und dessen freies Ende in einer ersten Stellung frei nach außen ragt und in einer zweiten, gegenüber der ersten Stellung verschwenkten Stellung oberhalb des Behälters (1) liegt, oder einen Schlauch (6, 80), an dessen Ende eine Abfüllpistole (8, 82) angeordnet ist, und einer Steuervorrichtung für das Pumpenaggregat zur dosierten Abgabe der Milch über die Abgabevorrichtung, **dadurch gekennzeichnet, daß** in der Abfüllpistole (8, 82) oder im Endbereich des galgenartigen Rohrs (56) ein Ventil (64) mit einem federvorgespannten Ventilglied angeordnet ist, das ab einem vorgegebenen Pumpendruck öffnet, wobei der Behälter (1) eine deichselartige Handhabe zum Ziehen und/oder Schieben des Behälters (1) aufweist und die Handhabe ein Bedienelement (78) für einen Schalter (52) für die Milchabgabe aufweist, wobei die Handhabe am Behälter (1) schräg angebrachte parallele Stangen (70, 72) aufweist, die am oberen Ende hornartige Griffabschnitte (74, 76) aufweisen, die einen Abstand zwischen sich freilassen, wobei das Bedienelement am freien Ende eines Hornabschnitts (74) angeordnet ist.

5. Milchwagen nach Anspruch 4, **dadurch gekennzeichnet, daß** mit dem Behälter (1) ein längerer Schlauch (80) verbunden ist, an dessen Ende die Abfüllpistole (82) angeordnet ist und an der Abfüllpistole (82) ein Bedienelement (86) angeordnet ist für einen Schalter für die Milchabgabe und das Bedienelement (86) über eine Signalstrecke mit einem Mikroprozessor (20) verbunden ist.

6. Milchwagen nach Anspruch 5, **dadurch gekennzeichnet, daß** die Signalstrecke eine Funkstrecke ist.

## Claims

1. A milk trolley on wheels for livestock breeding with a container (1) for receiving the milk, an electrically operated pump assembly arranged below the container floor, the suction side of which is connected to a drain in the container floor, and a dispensing device connected to the pressure side of the pump assembly wherein the dispensing device has a gallows-like pivotable tube (56), the pivotably mounted end of which is connected to the pressure side of the pump assembly, and the free end of which extends freely to the outside in a first position and, in a second position pivoted relative to the first position, lies above the container (1), or a hose (6, 80) on the end of which is arranged a filling nozzle (8, 82), and a control device for the pump assembly for the metered dispensing of the milk by means of the dispensing device, **characterized in that** a valve (64) with a spring-tensioned valve element is arranged in the filling nozzle (8, 82) or in the end region of the gallows-like tube (56), wherein the spring-tensioned valve element opens upon given pump pressure, wherein the valve (64) has a manual actuator for adjusting the valve element into a permanent open position.

2. The milk trolley according to claim 1, **characterized in that** the milk trolley has attachment means for a motor driven towing vehicle, an operating device for the control device is provided on the towing vehicle, in particular for actuating the pump assembly and metering the amount milk to be dispensed, and the operating device is coupled by means of a cable to the control device (4) on the container (1).

3. The milk trolley according to claim 1 or 2, **characterized in that** the pivot tube (56) has a swivel drive.

4. A milk trolley on wheels for livestock breeding with a container (1) for receiving the milk, an electrically operated pump assembly arranged below the container floor, the suction side of which is connected to a drain in the container floor, and a dispensing device connected to the pressure side of the pump assembly, wherein the dispensing device has a gallows-like pivotable tube (56), the pivotably mounted end of which is connected to the pressure side of the pump assembly, and the free end of which extends freely to the outside in a first position and, in a second position pivoted relative to the first position, lies above the container (1), or a hose (6, 80) on the end of which is arranged a filling nozzle (8, 82), and a control device for the pump assembly for the metered dispensing of the milk by means of the dispensing device, **characterized in that** a valve (64) with a spring-tensioned valve element is arranged in the filling nozzle (8, 82) or in the end region of the gallows-like tube (56) wherein the spring-tensioned valve element opens upon given pump pressure, wherein the container (1) has a towbar-like handle for pulling and/or pushing the container (1), and the handle has a control element (78) for a switch (52) for dispensing milk, wherein the handle on the container (1) has obliquely attached parallel rods (70, 72) that have horn-like grip sections (74, 76) on the top end and leave open a space between them, wherein the control element is arranged on the free end of a horn section (74).

5. The milk trolley according to claim 4, **characterized in that** a long hose (80) is connected to the container (1) and a dispensing nozzle (82) is arranged on its end, and a control element (86) is arranged on the dispensing device (82) for a switch for dispensing milk, and the control element (86) is connected to a microprocessor (20) via a signal path.

6. The milk trolley according to claim 5, **characterized in that** the signal path is a radio path.

## Revendications

1. Chariot à lait roulant pour l'élevage d'animaux de la ferme, doté d'une cuve (1) pour recevoir le lait, d'un groupe de pompage actionné électriquement, disposé en dessous du fond de la cuve, dont le côté d'aspiration est relié à un écoulement dans le fond de la cuve, et d'un dispositif de distribution raccordé au côté de refoulement du groupe de pompage, le dispositif de distribution présentant un conduit pivotant en forme de potence (56), dont l'extrémité montée de façon à pouvoir pivoter est reliée au côté de refoulement du groupe de pompage et dont l'extrémité libre dépasse à l'extérieur de manière apparente dans une première position et se situe au-dessus de la cuve (1) dans une seconde position basculée par rapport à la première position, ou bien un tuyau (6, 80), à l'extrémité duquel un pistolet de remplissage (8, 82) est disposé, et doté d'un dispositif de commande du groupe de pompage destiné à la distribution dosée du lait par le biais du dispositif de distribution, **caractérisé en ce qu'**une vanne (64) munie d'un organe de vanne sollicité par ressort est disposée dans le pistolet de remplissage (8, 82) ou dans la zone terminale du conduit en forme de potence (56), laquelle s'ouvre à partir d'une pression de pompe prédéfinie, dans lequel la vanne (64) présente un actionnement manuel pour ajuster l'organe de vanne dans une position ouverte permanente.

2. Chariot à lait selon la revendication 1, **caractérisé en ce que** le chariot à lait présente des moyens d'attelage à un véhicule tracteur automoteur, qu'une unité de manœuvre du dispositif de commande est prévue sur le véhicule tracteur, notamment pour actionner le groupe de pompage et le dosage de la quantité de lait à distribuer, et que l'unité de manœuvre peut être couplée au dispositif de commande (4) sur la cuve (1) par le biais d'un câble.

3. Chariot à lait selon la revendication 1 ou 2, **caractérisé en ce que** le conduit pivotant (56) présente un entraînement pivotant.

4. Chariot à lait roulant pour l'élevage d'animaux de la ferme, doté d'une cuve (1) pour recevoir le lait, un groupe de pompage actionné électriquement, disposé en dessous du fond de la cuve, dont le côté d'aspiration est relié à un écoulement dans le fond de la cuve, et d'un dispositif de distribution raccordé au côté de refoulement du groupe de pompage, le dispositif de distribution présentant un conduit pivotant en forme de potence (56), dont l'extrémité montée de façon à pouvoir pivoter est reliée au côté de refoulement du groupe de pompage et dont l'extrémité libre dépasse à l'extérieur de manière apparente dans une première position et se situe au-dessus de la cuve (1) dans une seconde position basculée par rapport à la première position, ou bien un tuyau (6, 80), à l'extrémité duquel un pistolet de remplissage (8, 82) est disposé, et doté d'un dispositif de commande du groupe de pompage destiné à la distribution dosée du lait par le biais du dispositif de distribution, **caractérisé en ce qu'**une vanne (64) munie d'un organe de vanne sollicité par ressort est disposée dans le pistolet de remplissage (8, 82) ou dans la zone terminale du conduit en forme de potence (56), laquelle s'ouvre à partir d'une pression de pompe prédéfinie, dans lequel la cuve (1) présente une manette agissant comme un timon pour tirer et/ou pousser la cuve (1) et la manette comporte un élément de commande (78) d'un commutateur (52) destiné à la distribution de lait, dans lequel la manette présente des barres parallèles (70, 72) montées en biais sur la cuve (1), qui comportent des parties de poignée en forme de corne (74, 76) à l'extrémité supérieure, qui laissent un espace entre elles, dans lequel l'élément de commande est disposé à l'extrémité libre d'une partie de poignée en forme de corne (74).

5. Chariot à lait selon la revendication 4, **caractérisé en ce qu'**un tuyau relativement long (80) est relié à la cuve (1), à l'extrémité duquel le pistolet de remplissage (82) est disposé et un élément de commande (86) est disposé sur le pistolet de remplissage (82) destiné à un commutateur de la distribution de lait et que l'élément de commande (86) est relié à un microprocesseur (20) moyennant un circuit de transmission de signaux.

6. Chariot à lait selon la revendication 5, **caractérisé en ce que** le circuit de transmission de signaux est une liaison radio.
